**Europäisches Patentamt**

**European Patent Office**

**Office européen des brevets**

(19)

(11) Veröffentlichungsnummer: **0 008 569**
**A1**

# (12) EUROPÄISCHE PATENTANMELDUNG

(21) Anmeldenummer: **79890025.4**

(22) Anmeldetag: **17.08.79**

(51) Int. Cl.³: **F 24 J 3/02**

(30) Priorität: **17.08.78 AT 6001/78**

(43) Veröffentlichungstag der Anmeldung:
**05.03.80 Patentblatt 80/5**

(84) Benannte Vertragsstaaten:
**CH DE FR IT**

(71) Anmelder: **Jäger, Walter**
**Villacherstrasse 32**
**A-9300 St.Veit/Glan(AT)**

(72) Erfinder: **Jäger, Walter**
**Villacherstrasse 32**
**A-9300 St.Veit/Glan(AT)**

(74) Vertreter: **Kretschmer, Adolf, Dipl-Ing.**
**Schottengasse 3a**
**A-1014 Wien(AT)**

(54) **Sonnenenergiekollektor, sowie Verfahren und Vorrichtung zu seiner Herstellung.**

(57) Der Sonnenenergiekollektor weist eine ebene oder gekrümmte Absorberoberfläche (1) auf, welche im wesentlichen dreieckförmigen Querschnitt aufweisende Spiegelelemente (4) trägt, welche die Sonneneinstrahlung auf die Absorberoberfläche (1) reflektieren. Die Spiegelelemente sind in vorteilhafter Weise als langgestreckte aufweitbare Profile ausgebildet, und können daher unter der Aufweitungsspannung an der Absorberoberfläche (1) in einfacher Weise durch Aufschieben auf entsprechende Gegenprofile (3) der Absorberoberfläche (1) formschlüssig festgelegt werden.

FIG.1

EP 0 008 569 A1

- 1 -

Sonnenenergiekollektor, sowie Verfahren und Vorrichtung zu
seiner Herstellung.

Die Erfindung bezieht sich auf einen Sonnenenergiekollektor,
auf ein Verfahren zur Herstellung eines solchen Sonnenenergiekollektors, sowie auf eine Vorrichtung zur Durchführung dieses Verfahrens. Im einzelnen bezieht sich die
Erfindung auf einen Solar-Flachkollektor, der neben praktischen Vorzügen Arbeitstemperaturen ermöglicht, die selbst
in unseren Breitengraden und auch in den kalten Jahreszeiten
die Heizung von Räumen und Wohnungen, bzw. die Füllung von
Wärmespeichern ermöglicht. Auf diese Weise ergibst sich eine
Entlastung im Brennstoffbedarf für herkömmliche Heizanlagen.

Bisher bekannte Flachkollektoren üblicher Bauart erreichen
zwar mehr oder weniger günstige Maximal-Temperaturen, können
jedoch - soll ein annehmbarer Wirkungsgrad erreicht werden -
in den meisten Fällen nur zur Warmwasseraufbereitung, bzw.
zur Schwimmbadheizung verwendet werden. Die meist großflächigen, schweren Elemente verursachen bei der Montage am
Dach einen großen Zeitverlust, der mit Kosten für den Käufer
verbunden ist. In der Winterzeit reichen die damit erzielbaren Mediumstemperaturen oft nicht aus, um eine Speicherung
von Wärme-Energie und damit die Beheizung von Räumen in an
und für sich bekannter Weise sicherzustellen.

Es sind auch konzentrierende Solar-Kollektoren bekannt geworden, bei denen eine meist große Zahl von Reflektor-Ein-

- 2 -

heiten (Heliostate) die Sonnen-Einstrahlung auf einen Absorber konzentrieren, wobei jeder einzelne dieser Reflektoren ständig gesteuert und bewegt werden muß, um dem Sonnenlauf zu folgen. Es erscheint einleuchtend, daß solche komplizierte Anlagen, die mit Regel- und Steuergeräten ausgestattet sein müssen, die winterliche Funktions- und Einsatzfähigkeit nicht immer erbringen.

Bekannt sich auch die meist unter Glas stehenden Absorptionsflächen - welche mit einer selektiv wirkenden Oberfläche versehen sind. Diese Beschichtung bewirkt, daß nur ein geringerer Teil der eingestrahlten Sonnenenergie wieder reflektiert, d.h. wieder nach außen abgestrahlt wird.

Betrachtet man den Einfall aller Sonnenstrahlen auf eine senkrecht zu diesen stehenden Flächeneinheit, so kann man theoretisch die Annahme treffen, daß es sich hier um ein räumliches Bündel parallel zueinander liegender Strahlen handelt, die diese Flächeneinheit beaufschlagen. Diese Fläche erfährt hiedurch eine mehr oder weniger starke Erwärmung, welche wiederum Ursache für die sehr unerwünschte Reflex-Wärmestrahlung (Emissionsstrahlung) ist.

Auch durch die oben erwähnten selektiven Oberflächen läßt sich diese Reflex-Strahlung nicht ganz verhindern, so daß - speziell bei Großflächenanlagen - ein beachtlicher Teil der Energie durch Strahlungsverluste verlorengeht. Eine wesentliche Temperatur-Steigerung läßt sich durch solche Maßnahmen daher kaum erreichen.

Die Erfindung geht aus von einem Sonnenenergiekollektor mit einer Absorberfläche mit Mitteln zum Abführen der absorbierten Energie und spiegelnden Flächen, und zielt darauf ab, einen solchen Sonnenenergiekollektor in Bezug auf seinen Wirkungsgrad wesentlich zu verbessern. Zur Lösung dieser Aufgabe ist die Erfindung im wesentlichen dadurch gekennzeichnet,

- 3 -

daß Teilbereiche der der Sonneneinstrahlungsrichtung zugewendeten Absorberoberfläche als über die Absorberoberfläche
vorragende, der Sonneneinstrahlungsrichtung zugewendete
Spiegel ausgebildet sind, deren Oberflächen die einfallenden
Sonnenstrahlen auf die Absorberoberfläche reflektieren.
Auf diese Weise wird eine Bündelung bzw. Konzentration der
Sonneneinstrahlung, bevor diese auf den eigentlichen
Absorptionsflächen in Wärme umgewandelt wird, erreicht. Der
prinzipielle Aufbau des Solar-Kollektors gleicht demnach
einem üblichen Flachkollektor, welcher fix montiert werden
kann und im wesentlichen den gleichen Aufbau besitzt. Der
Hauptunterschied besteht darin, daß nicht die gesamte unter
Glas liegende Oberfläche geschwärzt ist, sondern ein Teil
der Innenfläche durch reflektierende Spiegelprismen abgedeckt wird. Mit besonderem Vorteil ist die erfindungsgemäße
Ausbildung aber auch bei einem rohrförmigen Absorber verwendbar, welcher vorzugsweise im Brennpunkt eines Hohlspiegels angeordnet werden kann. Die erfindungsgemäße Ausbildung besteht in diesem Fall im wesentlichen darin, daß
die Absorberoberfläche gekrümmt insbesondere rohrförmige
ausgebildet ist, und somit von einem Rohrmantel bzw. einem
Kegelmantel gebildet ist,und die Spiegelprofile koaxial mit
der Achse der Krümmung in Achsrichtung nebeneinander angeordnet sind, wobei vorzugsweise die Absorberoberfläche von
einem im Brennpunkt eines Hohlspiegels angeordneten Rohr gebildet ist und die Dachkanten der Spiegel auf zur Rohrachse
konzentrischen Kreisen angeordnet sind, deren Durchmesser mit
zunehmenden Abstand von der Hohlspiegeloberfläche größer wird.
Bei einer solchen Ausbildung erfolgt die Konzentration der
Sonneneinstrahlung gleichermaßen zweistufig, und zwar zum
einen durch den Hohlspiegel und zum anderen durch die Konzentration im Bereich des eigentlichen Absorbers. Ein besonders guter Wirkungsgrad ergibt sich, wenn in einem solchen
Fall die Querschnitte der konzentrisch angeordneten Spiegelprofile von schiefen Dreiecken gebildet sind, wobei die

- 4 -

Winkelsymmetrale des den Außenumfang der Ringe berührenden
Winkels mit der Rohrachse an der dem Hohlspiegel zugewendeten Seite einen spitzen Winkel (kleiner 90$^\circ$) einschließt.

Erfindungsgemäß werden bevorzugt Spiegel mit einem im wesentlichen dachförmigen Querschnittsprofil verwendet. Zur
weiteren Bündelung der Sonneneinstrahlung sind vorzugsweise
die Schenkel der dachförmigen Querschnittsprofile konkav gekrümmt ausgebildet.

Bei einer Ausbildung des Sonnenenergiekollektors als Flachkollektor erstrecken sich die langgestreckten Spiegel im
wesentlichen geradlinig vorzugsweise über die gesamte Breite
der Absorberoberfläche und sind in Abständen voneinander im
wesentlichen parallel zueinander angeordnet. Zur Ausbildung
der konkaven Krümmung der Schenkel der dachförmigen Querschnittsprofile können die Spiegelprofile Versteifungsrippen
aufweisen, deren Krümmung der konkaven Krümmung der Schenkel
der Spiegelprofile entspricht. Die Ausbildung kann hiebei so
getroffen sein, daß die Schenkel der dachförmigen Querschnittsprofile eine parallel zur Achse der Spiegel verlaufende Wellung oder Profilierung tragen.

Der Sonnenenergiekollektor weist in der Regel in Abständen
voneinander verlaufende Rohrleitungen für die Ableitung der
Energie auf und die Ausbildung ist erfindungsgemäß so getroffen, daß die Spiegelprofile symmetrisch zu einem in die
Absorberoberfläche eingebetteten Medienrohr für die Ableitung
der absorbierten Energie angeordnet sind.

Die absorbierende Oberfläche des Sonnenenergiekollektors kann
prinzipiell einstückig mit den spiegelnden Teilbereichen der
Oberfläche ausgebildet sein. In diesem Fall werden die
zwischen den spiegelnden Teilbereichen der Oberflächen

- 5 -

liegenden Teile dunkel gefärbt, während die spiegelnden Teilbereiche entweder unverändert belassen oder mit einem gut reflektierendem Schutzanstrich versehen werden.

Vorzugsweise werden jedoch die spiegelnden Teilbereiche gesondert von den übrigen Teilen der Absorberoberflächen hergestellt und das erfindungsgemäße Verfahren zur Herstellung eines Sonnenenergiekollektors bezieht sich auf diese bevorzugte Ausführungsform des Sonnenenergiekollektors. Das erfindungsgemäße Verfahren zur Herstellung eines derartigen Sonnenenergiekollektors ist im wesentlichen dadurch gekennzeichnet, daß ein Träger mit einer Absorberoberfläche verbunden wird, welche in Abständen voneinander angeordnete Erhebungen oder Vertiefungen aufweist, und daß die Spiegel mit den Erhebungen oder Vertiefungen der Absorberoberfläche entsprechenden Vertiefungen oder Erhebungen ausgebildet und formschlüssig mit der Absorberoberfläche verbunden werden. Vorzugsweise wird hiebei so vorgegangen, daß das Querschnittsprofil der Spiegel kontinuierlich aus einem Band, insbesondere aus Eisen oder Edelstahlblech, gebogen oder insbesondere als Kunststoffprofil extrudiert wird, und daß das Spiegelprofil auf die Absorberoberfläche in ein entsprechendes Aufnahmeprofil aufgeschoben und hierauf in der erforderlichen Länge abgelängt wird, daß anschließend die Absorberoberfläche quer zur Längsrichtung der Achse der Querschnittsprofile verschoben wird bis das nächstfolgende Aufnahmeprofil der Absorberoberfläche mit der Längsachse der Spiegel fluchtet, worauf das Spiegelprofil wieder seitlich eingeschoben und abgelängt wird, und daß diese Schritte bis zur vollständigen Bestückung der Absorberoberfläche mit den Spiegeln wiederholt werden. Auf diese Weise wird ein automatischer Verfahrensablauf ermöglicht, da lediglich der Vorschub des Spiegelprofiles sowie der Absorberoberfläche in zueinander senkrechten Bewegungsrichtungen entsprechend gesteuert werden muß, und die Ablängeinrichtung jeweils nach vollständigem Aufschieben

0008569

- 6 -

eines Spiegelprofiles in Tätigkeit gesetzt werden muß. In besonders einfacher Weise ist das erfindungsgemäße Verfahren dadurch zu realisieren, daß die Absorberoberfläche in Form von parallelen Platten auf den Träger aufgebracht und mit diesem verbunden wird, und daß die Ränder der Platten aus der Absorberoberflächenebene heraus zur Bildung des Aufnahmeprofils für die Spiegelprofile zurückgebogen werden. Die einzelnen Platten der Absorberoberflächen sollen hiebei nicht über ihre gesamte Fläche starr mit dem Träger, welcher üblicherweise von einem Isolationsmaterial gebildet ist, verbunden werden, um eine relative Verschiebung der Platten des Absorbermaterials gegenüber dem Träger auf Grund von Unterschieden im thermischen Ausdehnungskoeffizienten zuzulassen. Vorzugsweise ist die Ausbildung so getroffen, daß der freie Abstand zweier benachbarter Platten der Absorberoberfläche gleich oder größer als der lichte Abstand der freien Schenkelenden des Querschnittsprofiles der Spiegel gewählt wird. Auf diese Weise kann das Querschnittsprofil des Spiegels in einfacher Weise entsprechend einem Dreieck gewählt werden und durch die Aufweitung des lichten Abstandes der freien Schenkelenden des Spiegelprofiles beim Aufschieben auf die entsprechenden Aufnahmeprofile der Absorberoberfläche ergibt sich automatisch eine konkave Krümmung, wenn der Abstand zweier benachbarter Platten größer ist, als der lichte Abstand der freien Schenkelenden des Querschnittsprofiles der Spiegel im spannungslosen Zustand derselben.

Die erfindungsgemäße Vorrichtung zur Durchführung dieses Verfahrens ist gekennzeichnet durch eine Vorratstrommel für bandförmiges Material und eine Biegeeinrichtung zum Biegen oder einen Extruder zum Auspressen des gewünschten Querschnittsprofiles der Spiegel, eine Einrichtung zum Ablängen der austretenden Querschnittprofile der Spiegel und eine Transporteinrichtung zum Verschieben eines mit der Absorberoberfläche beschichteten Tragkörpers quer zur Austritts-

- 7 -

öffnung des Spiegelprofiles. Eine derartige Vorrichtung kann in einfacher Weise vollautomatisch gesteuert werden und erlaubt die besonders wirtschaftliche Herstellung eines erfindungsgemäßen Sonnenenergiekollektors.

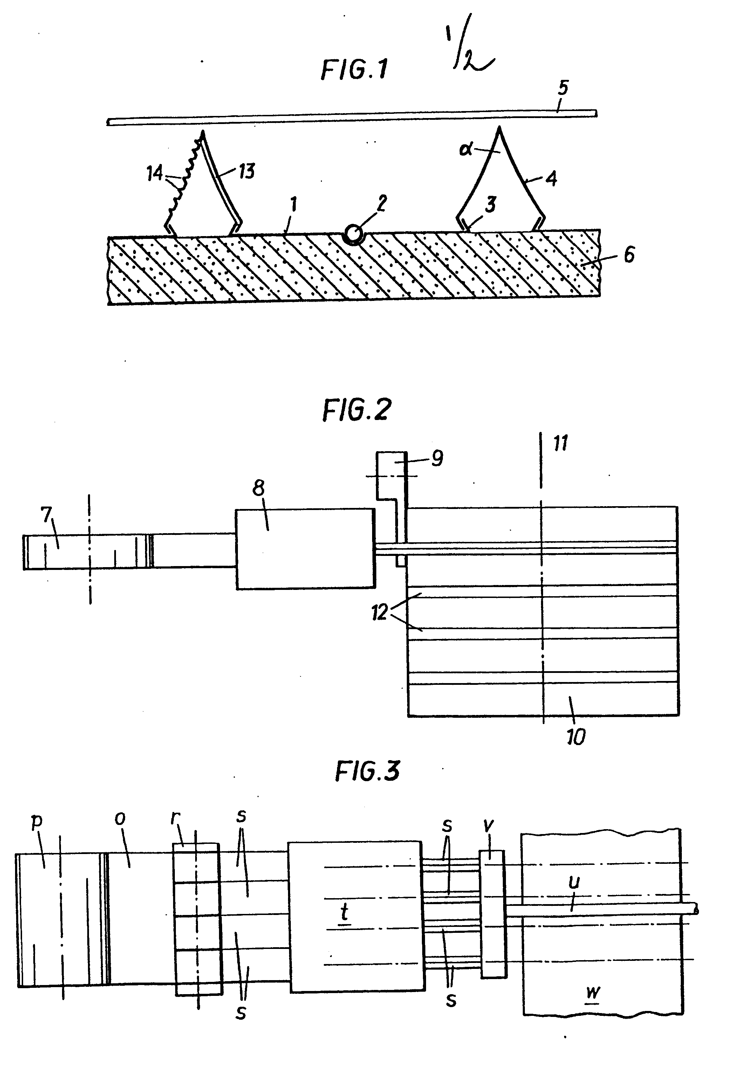

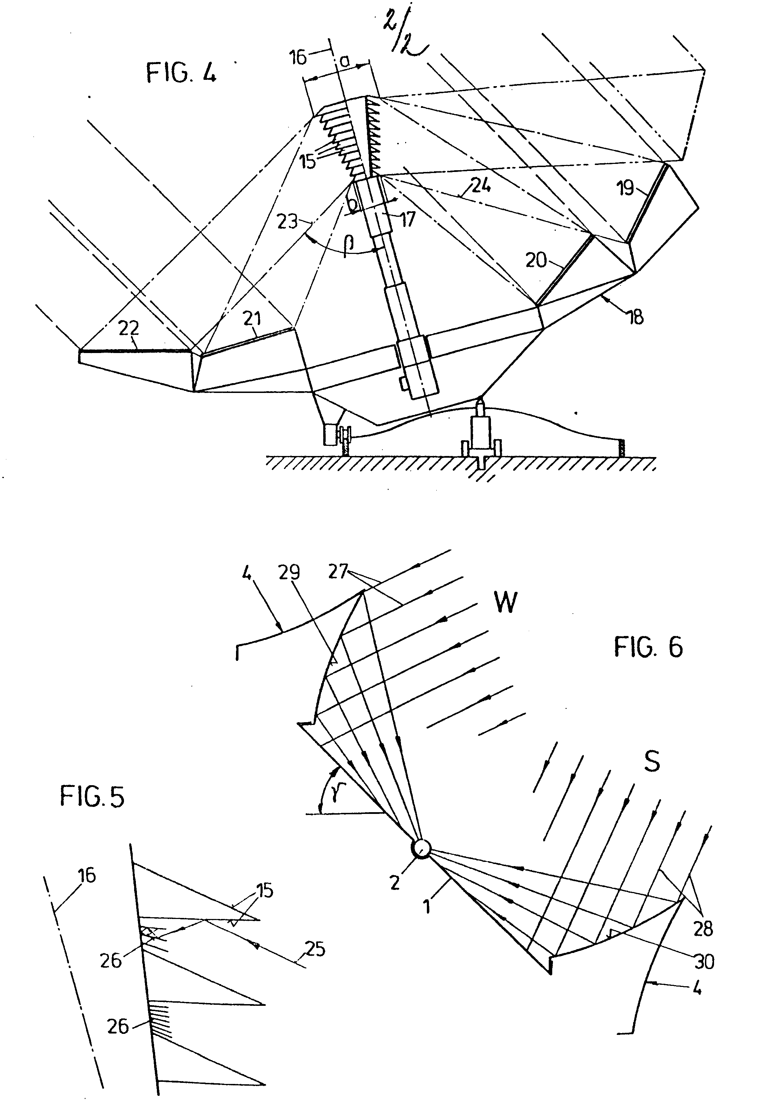

Die Erfindung ist nachfolgend an Hand von Ausführungsbeispielen in der Zeichnung schematisch erläutert. In dieser zeigen Fig. 1 einen Querschnitt durch einen Teilbereich des erfindungsgemäßen Sonnenenergiekollektors, Fig. 2 eine Vorrichtung zur Herstellung eines solchen Sonnenenergiekollektors gemäß Fig. 1, Fig. 3 eine schematische Darstellung einer weiteren Vorrichtung zur Herstellung des Sonnenenergiekollektors nach Fig. 1, Fig. 4 eine weitere Ausführungsform des erfindungsgemäßen Sonnenenergiekollektors in Verbindung mit einem Hohlspiegel, Fig. 5 eine Teilansicht der Fig. 4 und Fig. 6 einen Kollektor nach Fig. 1 bei Strahlungseinfall im Sommer und im Winter.

In Fig. 1 ist der Querschnitt durch einen teilkonzentrierenden Kollektor dargestellt. Es bedeuten darin 1 die Absorptionsflächen, die selbstverständlich auch eine selektive Oberfläche besitzen können.

Die absorbierte Wärme wird durch das Medienrohr 2 abgeleitet. Die Absorptionsflächen besitzen an ihren jeweiligen Rändern nach innen ragende Abkantungen 3, in welche die Spiegelprofile 4 federnd eingreifen. Die gesamte Anordnung ist durch ein oder mehrere transparente Abdeckungen 5 sonnenseitig abgeschlossen. Den rückwärtigen Abschluß bildet die Isolierschichte 6. Die Absorptionsflächen 1 sind plattenförmig ausgebildet und vorzugsweise nur an ihren Rändern an der Isolierschicht 6 festgelegt.

Der Keilwinkel $\alpha$ der dachförmigen Spiegelprofile richtet sich jeweils danach, wie stark die Konzentration der Solarstrahlung gewünscht wird, und inwieweit die Flachkollektorelemente beweglich, bzw. schwenkbar gelagert sind, um sich
den jeweils örtlichen Verhältnissen und dem täglichen
Strahlungseinfall anzupassen. Dazu sind die Flanken der
Prismenleisten oder Spiegelprofile konkav oder gerillt, wie
dies bei 14 angedeutet ist, ausgebildet. Erfindungsgemäß
ist sichergestellt, daß die verschiedenen Profile - Prismenprofile bevorzugt - von der Fabrikation her einen spitzeren
Winkel besitzen, der bei der Montage konstruktionsbedingt
erweitert wird, wobei sich eine konkave Oberflächenwölbung ergibt. Durch Einpressen von Verstärkungsrippen 13
in die Prismenflächen (oder andere Profile), können die
Blechstärken der Prismenprofile (oder anderen) verringert
und die Konkav-Form stärker betont werden. Auf diese Weise
gelingt es, die einfallenden Sonnenstrahlen zu konzentrieren,
was eine bedeutende Erhöhung der Betriebstemperaturen auch
in kalten Jahreszeiten ergibt. Weiters gelingt es hiedurch
die Wärmeverluste, sei es nun durch Wärmeabstrahlung oder
durch Konvektion erheblich zu reduzieren. Dementsprechend
gelingt es auch weiters durch diese erfindungsgemäßen
Kollektoren Betriebstemperaturen und einen Gesamtwirkungsgrad zu erzielen, wie diese bei Flachkollektoren üblicher
Bauarten kaum erreicht werden können.

In der industriellen Massenfertigung solcher erfindungsgemäßer Kollektoren ergibt sich naturgemäß ein weites
Spektrum verschiedener Ausführungsformen und Produktionsmöglichkeiten.

Im Sinne einer rationellen Herstellung soll erfindungsgemäß
das Verfahren für die Fertigung der Reflexprismen vom Band
erfolgen. Im gleichen Fertigungsfluß soll auch die Bestückung
der Absorberflächen voll mechanisiert erfolgen.

Fig. 2 zeigt beispielsweise eine solche erfindungsgemäße Anordnung. Von der Rolle 7 wird laufend z.B. Edelstahlspiegelblech in den Rollengang 8 abgezogen, welcher das entsprechende Prismenprofil formt. Das fertig gewalzte Profil
wird durch entsprechende Zuführungen direkt auf den Absorberstreifen geschoben, wie es beispielsweise in Fig. 1 dargestellt ist.

Sobald das Prismenprofil die genaue Länge erreicht hat,
tritt die Kapptrennsäge 9 in Funktion, welche das Prismenprofil abschneidet. Durch Weitertransport des Absorptionsrahmens am Band 10 in Richtung 11 wird die nächste Absorberlücke 12 für die automatische Bestückung freigegeben. Der
automatisch arbeitende Fabrikationsvorgang ist mit der kompletten Bestückung des Absorbergefüges abgeschlossen.

Das somit entstandene Gefüge von Absorber und Prismeneinheit
stellt ein relativ statisch festes Gefüge dar, welches durch
das hohe Biegemoment der Absorptionsflächen noch verstärkt
wird.

Auch die Möglichkeit erfindungsgemäß Stegflächen, bzw.
Reflektionsprismen, Raster, usw. laufend endlos und automatisch herzustellen und diese - wenn erforderlich, mit
aufgedruckten (selektiven) Absorberflächen - entweder auf
wärmemediumführende Unterflächen aufzuschweißen, oder diese
auch stirnseitig an Wärmeleitrohre metallisch anzuschließen,
soll als weiteres erfindungsgemäßes praktisches Ausführungsbeispiel angeführt werden.

In besonderen Anwendungsfällen ist es im Sinne der Erfindung,
Reflexprismen rund, schrauben- oder kreisförmig so anzuordnen oder zu fertigen, daß sich diese auch gebogenen, bzw.
Rundabsorbern anpassen.

Solche konzentrierende Reflexraster bzw. -prismen können aus

- 10 -

Metall, Glas oder auch Kunststoff usw. gefertigt sein.

Fig. 3 zeigt ein weiteres Ausführungsbeispiel einer erfindungsgemäßen Vorrichtung für die industrielle Herstellung von Reflexionsprofilen. Die Rundmesser r schneiden aus dem Absorberblechband o, welches von der Haspel p abgezogen wird, die erforderlichen Streifen s einzeln heraus; durch Verdrehen um 90$^{o}$ werden diese hochkant gestellt, in der Sammelschleuse t gerichtet und gehalten. Die Zugstange u erfaßt die gerichteten Enden der Streifen s durch die Paketzange v und zieht diese über das Profileisen w. Dadurch entsteht das Prismenprofil, welches in die Nuten des Absorberprofiles eingeschoben, aufgeschweißt, aufgelötet oder eingepreßt wird.

Fig. 4 zeigt einen hochkonzentrierenden Rundkollektor, bei welchem die Reflexprismenleisten erfindungsgemäß ringförmig ausgebildet sind und beispielsweise einen asymmetrischen Querschnitt aufweisen. Die in diesem Erfindungsbeispiel gezeigte Konstruktionsform läßt einen Konzentrationsfaktor von 20, 40 und noch mehr zu, und ermöglicht die wirtschaftliche Produktion von hochgespanntem, überhitztem Heißdampf zu jeder günstigen Tagesstunde, womit der Betrieb von Solar-Kraftwerken ermöglicht wird. Durch die Anordnung der Prismen, wird eine 20 bis 40fache Verstärkung der einfallenden Sonnenstrahlen erreicht. Dies ist durch die Doppelkonzentration sichergestellt. Eine so starke Verfielfachung ist bisher noch nicht erreicht worden.

Die Spiegelprofile sind in Fig. 4 mit 15 bezeichnet und konzentrisch zur Achse 16 des rohrförmig ausgebildeten Absorbers 17 angeordnet. Der von den Spiegelprofilen 15 umgebene Teil des Absorbers 17 ist im Bereich der Schnittpunkte der vom Hohlspiegel 18 reflektierten Strahlen angeordnet. Der Hohlspiegel 18 weist hiebei hohlkonische Teilbereiche 19 und 20 auf, welche die Sonnenstrahlung auf die Spiegelprofile 15 reflektieren. Die diesen Teilbereichen 19 und 20 diametral gegenüberliegenden Teilbereiche 21 und 22 des Hohlspiegels sind entsprechend der Schrägstellung der Spiegelachse 16 zur Achse der einfallenden Sonnenstrahlung anders geneigt angeordnet, um gleichfalls die einfallende Sonnenstrahlung auf die Spiegelprofile 15 zu reflektieren. Die Spiegelprofile 15 sind hiebei so ausgebildet, daß die Außendurchmesser, d.h. die Dachkantendurchmesser von innen b nach außen a größer werden. Die Winkelsymmetralen 23, 24 der Dachkantenwinkel schließen mit der Achse 16 einen spitzen Winkel $\beta$ ein, wodurch sich der in Fig. 5 vergrößert dargestellte Strahlengang verwirklichen läßt. Der Strahl 25 wird an der dem Spiegel zugewendeten Seite der Spiegelprofile 15 reflektiert und an rippenförmigen Absorptionsflächen 26 absorbiert, wodurch eine große absorbierende Oberfläche intensiv mit Sonnenstrahlung beaufschlagt wird.

Die vorliegende Erfindung gewährleistet durch ihre Konstruktion und Bauart einen konzentrierenden Effekt, der eine Hochtemperaturgewinnung aus Sonnenenergie, auch in der kalten Jahreszeit ermöglicht. Damit ist eine mehr oder weniger autarke Energieversorgung für Zentralheizungen usw. über Speicher gegeben. Dies insbesondere auch dann, wenn auf bewegliche Teile am Kollektor verzichtet werden soll.

Fig. 6 zeigt schematisch einen teilkonzentrierenden Kollektor, wie er in Fig. 1 beschrieben wurde, wobei in einer Hälfte der Fig. 6 der Strahlungseinfall wie er im Winter und in der anderen Hälfte der Strahlungseinfall wie er im Sommer auftritt, dargestellt ist. Die Absorptionsfläche 1 mit den Spiegelprofilen 4 ist gegenüber der Horizontale um einen Winkel $\gamma$ schräggestellt. In Fig. 6 sind die im Winter einfallenden Sonnenstrahlen mit 27 und die im Sommer einfallenden Sonnenstrahlen mit 2 bezeichnet. Da die Sonnenstrahlen 27 im Winter

- 12 -

unter einem wesentlich flacheren Winkel einfallen als im Sommer, treffen diese auf die der Erdoberfläche zugewandten Flächen 29 des Spiegelprofiles 4 auf, und werden von dort auf die Absorberfläche 1 reflektiert. Die Sonnenstrahlen 28 treffen im Sommer auf die der Erdoberfläche abgewandten Flächen 30 des Spiegelprofiles 4 auf, und werden ebenfalls auf die Absorptionsfläche 1 reflektiert. Es wird dadurch mit einfachen Mitteln eine Verstärkung der einfallenden Sonnenstrahlen unabhängig von der jeweiligen jahreszeitlich verschiedenen Einstrahlungsrichtung erreicht.

1979 08 16 sm

0008569

- 1 -

Patentansprüche:

1. Sonnenenergiekollektor mit einer Absorberfläche mit Mitteln zum Abführen der absorbierten Energie und spiegelnden Flächen,
dadurch gekennzeichnet,
daß Teilbereiche der der Sonneneinstrahlungsrichtung zugewendeten Absorberoberfläche (1, 17) als über die Absorberfläche vorragende, der Sonneneinstrahlungsrichtung zugewendete Spiegel (4, 15) ausgebildet sind, deren Oberflächen die einfallenden Sonnenstrahlen (25, 27, 28) auf die Absorberfläche (1, 17) reflektieren.

2. Sonnenenergiekollektor nach Anspruch 1,
dadurch gekennzeichnet,
daß die Spiegel (4, 15) ein im wesentlichen dachförmiges Querschnittsprofil aufweisen.

3. Sonnenenergiekollektor nach Anspruch 2,
dadurch gekennzeichnet,
daß die Schenkel (14) der dachförmigen Querschnittsprofile konkav gekrümmt ausgebildet sind.

4. Sonnenenergiekollektor nach einem der Ansprüche 1, 2 oder 3,
dadurch gekennzeichnet,
daß die Absorberoberfläche (1) im wesentlichen eben ausgebildet ist, daß die Spiegel (4) sich im wesentlichen geradlinig über die gesamte Breite der Absorberoberfläche (1) erstrecken und in Abständen voneinander im wesentlichen parallel zueinander angeordnet sind.

5. Sonnenenergiekollektor nach einem der Ansprüche 2, 3 oder 4,
dadurch gekennzeichnet,
daß die Schenkel der dachförmigen Querschnittsprofile eine parallel zur Längsrichtung der Spiegel verlaufende Wellung oder Profilierung tragen.

6. Sonnenenergiekollektor nach einem der Ansprüche 1 bis 5, dadurch gekennzeichnet, daß die Spiegelprofile (4) Versteifungsrippen (13) aufweisen, deren Krümmung der konkaven Krümmung der Schenkel (14) der Spiegelprofile (4) entspricht.

7. Sonnenenergiekollektor nach einem der Ansprüche 1 bis 6, dadurch gekennzeichnet, daß die Spiegelprofile (4) symmetrisch zu einem in die Absorberoberfläche (1) eingebetteten Medienrohr (2) für die Ableitung der absorbierten Energie angeordnet sind.

8. Sonnenenergiekollektor nach einem der Ansprüche 1 bis 3, 5 oder 6, dadurch gekennzeichnet, daß die Absorberoberfläche (17) gekrümmt insbesondere rohrförmig ausgebildet ist, und die Spiegelprofile (15) koaxial mit der Achse (16) der Krümmung in Achsrichtung nebeneinander angeordnet sind.

9. Sonnenenergiekollektor nach Anspruch 7, dadurch gekennzeichnet, daß die Absorberoberfläche (17) von einem im Brennpunkt eines Hohlspiegels (18) angeordneten Rohr gebildet ist und die Dachkanten der Spiegel (15) auf zur Rohrachse konzentrischen Kreisen angeordnet sind, deren Durchmesser (a, b) mit zunehmenden Abstand von der Hohlspiegeloberfläche größer wird.

10. Sonnenenergiekollektor nach Anspruch 8, dadurch gekennzeichnet, daß die Querschnitte der konzentrisch angeordneten Spiegelprofile (15) von schiefen Dreiecken gebildet sind, wobei die Winkelsymmetrale des den Außenumfang der Ringe berührenden Winkels  mit der Rohrachse an der dem Hohlspiegel (18) zugewendeten Seite einen spitzen Winkel
(kleiner 90°) einschließt.

11. Verfahren zur Herstellung eines Sonnenenergiekollektors nach einem der Ansprüche 1 bis 7,
dadurch gekennzeichnet,
daß ein Träger mit einer Absorberoberfläche (1) verbunden wird, welche in Abständen voneinander angeordnete
Erhebungen (3) oder Vertiefungen aufweist, und daß die
Spiegel (4) mit den Erhebungen (3) oder Vertiefungen der
Absorberoberfläche (1) entsprechende Vertiefungen oder
Erhebungen ausgebildet und formschlüssig mit der
Absorberoberfläche (1) verbunden werden.

12. Verfahren nach Anspruch 11,
dadurch gekennzeichnet,
daß das Querschnittsprofil der Spiegel (4) kontinuierlich aus einem Band, insbesondere aus Eisen oder Edelstahlblech, gebogen oder insbesondere als Kunststoffprofil extrudiert wird, und daß das Spiegelprofil (4) auf
die Absorberoberfläche in ein entsprechendes Aufnahmeprofil (3) aufgeschoben und hierauf in der erforderlichen
Länge abgelängt wird, daß anschließend die Absorberoberfläche (1) quer zur Längsrichtung der Spiegel verschoben
wird bis das nächstfolgende Aufnahmeprofil der Absorberoberfläche mit der Längsrichtung der Spiegel fluchtet,
worauf das Spiegelprofil wieder seitlich eingeschoben
und abgelängt wird, und daß diese Schritte bis zur vollständigen Bestückung der Absorberoberfläche mit den
Spiegeln wiederholt werden.

13. Verfahren nach einem der Ansprüche 11 oder 12,
dadurch gekennzeichnet,
daß die Absorberoberfläche (1) in Form von parallelen
Platten auf den Träger aufgebracht und mit diesem ver-

- 4 -

bunden wird, und daß die Ränder der Platten aus der Absorberoberflächenebene heraus zur Bildung der Aufnahmeprofils (3) für die Spiegelprofile (4) zurückgebogen werden.

14. Verfahren nach Anspruch 13, dadurch gekennzeichnet, daß der freie Abstand zweier benachbarter Platten der Absorberoberfläche (1) gleich oder größer als der lichte Abstand der freien Schenkelenden des Querschnittsprofiles der Spiegel (4) gewählt wird.

15. Vorrichtung zur Durchführung des Verfahrens nach einem der Ansprüche 11 bis 14, gekennzeichnet durch eine Vorratstrommel (7, 9) für bandförmiges Material (o) und eine Biegeeinrichtung (8) zum Biegen oder einen Extruder zum Auspressen des gewünschten Querschnittsprofiles der Spiegel, eine Einrichtung (9) zum Ablängen der austretenden Querschnittsprofile der Spiegel und eine Transporteinrichtung zum Verschieben eines mit der Absorberoberfläche beschichteten Tragkörpers quer zur Austrittsöffnung des Spiegelprofiles.

FIG.1

1/2

FIG.2

FIG.3

FIG. 4

FIG. 5

FIG. 6

Nummer der Anmeldung

EP 79 89 0025

Europäisches Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 4 059 094 (BARRIO DE MENDOZA) <br><br> * Spalte 2, Zeilen 53-68; Spalten 3,4,5,6; Figuren 1,2,3 * <br><br> -- | 1,4,7 |
| | US - A - 4 090 495 (LESK) <br> * Ganzes Dokument * <br><br> -- | 1,4 |
| | US - A - 2 969 788 (NEWTON) <br> * Ganzes Dokument * <br><br> -- | 1,4 |
| | US - A - 3 295 512 (McCUSKER) <br> * Ganzes Dokument * <br><br> -- | 8,9 |
| A | FR - A - 2 079 687 (ALEXANDROFF) | 1 |
| A | FR - A - 2 303 251 (TOUCHAIS) | 1 |
| A | US - A - 3 650 233 (YOUNG) | 1 |
| A | US - A - 4 011 855 (ESHELMAN) | 1 |

---- 

**KLASSIFIKATION DER ANMELDUNG (Int.Cl. 3)**

F 24 J 3/02

**RECHERCHIERTE SACHGEBIETE (Int. Cl. 3)**

F 24 J
B 23 P
B 21 D

--

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22-11-1979 | SMETS |

EPA form 1503.1 06.78